# EUROPEAN PATENT APPLICATION

(11) **EP 4 534 598 A1**
(43) Date of publication of application: **09.04.2025**
(21) Application number: 23815653.3
(22) Date of filing: 28.04.2023
(51) Int. Cl.: C08L 33/24, C08K 5/544, C09D 7/63, C09D 133/04

(54) **HYDROPHILIC COMPOSITION**

(30) Priority: 30.05.2022 JP 2022087657
(71) Applicant: SHIN-ETSU CHEMICAL CO., LTD., Tokyo 1000005 (JP)
(72) Inventor: TAKAGI, Kazunori, Annaka-shi, Gunma 379-0224 (JP); HIROKAMI, Munenao, Annaka-shi, Gunma 379-0224 (JP)
(74) Representative: Mewburn Ellis LLP
(86) International application number: PCT/JP2023/016789
(87) International publication number: WO 2023/233892

(57) **Abstract**

A hydrophilic composition that contains (A) 100 parts by mass of a hydrophilic copolymer containing structural units represented by formula (1) and structural units represented by formula (2), and (B) 0.001-10 parts by mass of a blocked isocyanate silane compound, yields a coating film having exceptional hydrophilicity, anti-fogging properties, and water resistance. 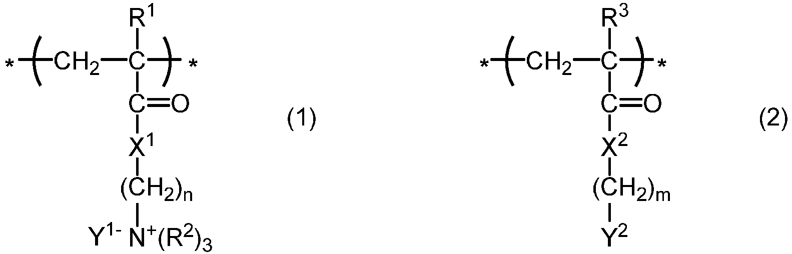 (R¹ represents a hydrogen atom or a methyl group, R² represents a C1-6 alkyl group, X¹ represents -NH- or -O-, n represents an integer of 1-6, Y¹⁻ represents a monovalent anion, R³ represents a hydrogen atom or a methyl group, X² represents -NH- or -O-, Y² represents a monovalent functional group selected from the group consisting of hydrogen atoms, hydroxyl groups, carboxy groups, amino groups, acid anhydride groups, and alkoxysilyl groups, and m represents an integer of 0-10. However, when m is 0, Y² is a hydrogen atom. An asterisk * represents bonding to an adjacent structural unit.)

## Description

### TECHNICAL FIELD

The present invention relates to a hydrophilic composition. More particularly, the invention relates to a hydrophilic composition that includes a hydrophilic copolymer.

### BACKGROUND ART

In recent years, there has been a growing desire to minimize the fogging of substrates formed of organic materials such as plastic or inorganic materials such as glass.

The fogging of a substrate is typically ameliorated by coating a hydrophilic film onto the surface of the substrate. For example, Patent Document 1 discloses, as a coating agent capable of imparting hydrophilicity to a substrate, a coating composition to which has been added a hydrophilic copolymer having a highly hydrophilic quaternary ammonium salt structure.

However, coating films formed with this coating composition lack sufficient water resistance; when the film comes into contact with water, surface properties such as hydrophilicity and fog resistance sometimes deteriorate. Further improvement has thus been desired.

### PRIOR ART DOCUMENTS

### PATENT DOCUMENTS

Patent Document 1: JP-A 2018-162431

### SUMMARY OF INVENTION

### TECHNICAL PROBLEM

In light of these circumstances, the object of this invention is to provide a hydrophilic copolymer-containing hydrophilic composition which gives a film of excellent hydrophilicity, fog resistance and water resistance.

### SOLUTION TO PROBLEM

The inventors have conducted intensive investigations aimed at achieving the above object. As a result, they have discovered that compositions which contain a specific hydrophilic copolymer and a blocked isocyanate silane compound have excellent water resistance and give films which can impart long-lasting hydrophilicity and fog resistance to substrates formed of organic materials such as plastic or inorganic materials such as glass. This discovery ultimately led to the present invention.

Accordingly, the invention provides:
1. A hydrophilic composition which includes:
   (A) 100 parts by weight of a hydrophilic copolymer having constitutional units of formula (1) below and constitutional units of formula (2) below 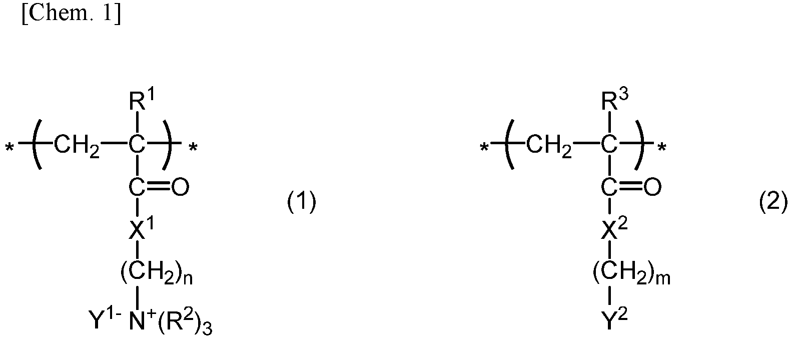 (wherein, in formula (1), R¹ is a hydrogen atom or a methyl group, each R² is independently a substituted or unsubstituted alkyl group of 1 to 6 carbon atoms, X¹ is -NH- or -O-, n is an integer from 1 to 6, and Y¹⁻ is a monovalent anion; in formula (2), R³ is a hydrogen atom or a methyl group, X² is -NH- or -O-, Y² is a monovalent functional group selected from the group consisting of a hydrogen atom and hydroxyl, carboxyl, amino, acid anhydride and alkoxysilyl groups, m is an integer from 0 to 10, with the proviso that if m is 0, Y² is a hydrogen atom, and an asterisk * denotes a bond to a neighboring constitutional unit), and
   (B) 0.001 to 10 parts by weight of a blocked isocyanate silane compound;
2. The hydrophilic composition of 1 above, wherein the blocked isocyanate silane compound (B) is represented by formula (4) below 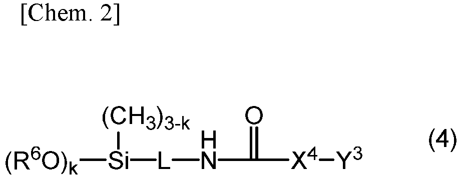 (wherein each R⁶ is independently an alkyl group of 1 to 8 carbon atoms, L is a divalent linking group, X⁴ is -O- or -NR⁷-, Y³ a hydrogen atom or a monovalent organic group, R⁷ is a hydrogen atom, an alkyl group of 1 to 8 carbon atoms or a group that is able to bond with Y³ and form a ring structure, and k is an integer from 1 to 3);
3. The hydrophilic composition of 2 above, wherein the blocked isocyanate silane compound (B) is represented by formula (5) or (6) below 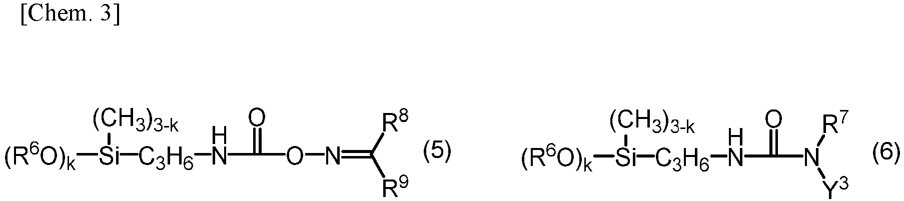 (wherein R⁶, R⁷, Y³ and k have the same meanings as above, R⁸ and R⁹ are each independently a hydrogen atom or a monovalent organic group, and R⁸ and R⁹ or R⁷ and Y³ may mutually link to form a ring structure);
4. The hydrophilic composition of 1 above, further including at least one compound selected from the group consisting of polyisocyanate compounds, organosilicon compounds of formula (7) below and organosilicon compounds of formula (8) below 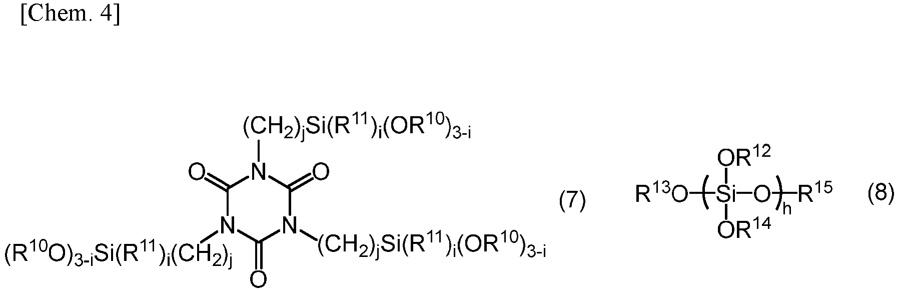 (wherein, in formula (7), R¹⁰ and R¹¹ are each independently an alkyl group of 1 to 10 carbon atoms or an aryl group of 6 to 10 carbon atoms, j is an integer from 1 to 10, and i is an integer from 1 to 3;
   in formula (8), R¹², R¹³, R¹⁴ and R¹⁵ are each independently a hydrogen atom or an organic group of 1 to 6 carbon atoms, and h is an integer from 1 to 20);
5. A coating agent which includes the hydrophilic composition of any of 1 to 4 above; and
6. A hydrophilic film obtained by curing the coating agent of 5 above.

### ADVANTAGEOUS EFFECTS OF INVENTION

The hydrophilic composition of the invention gives a film that has excellent water resistance and can impart long-lasting hydrophilicity and fog resistance to organic substrates such as plastic and inorganic substrates such as glass.

### DESCRIPTION OF EMBODIMENTS

The invention is described more fully below.

### [A] Hydrophilic Copolymer

The hydrophilic copolymer used in the hydrophilic composition of the invention (also referred to below simply as "the copolymer" or "component (A)") includes subsequently described constitutional units (a) and (b).

The constitutional units of the hydrophilic copolymer are described below.

Constitutional unit (a) included in the hydrophilic copolymer used in the invention is represented by formula (1) below.

Because the ammonium group included in constitutional unit (a) has a high hydrophilicity and a low affinity with organic solvents, the film surface is readily exposed and a film having a hydrophilic ingredient immobilized on the surface can be obtained. 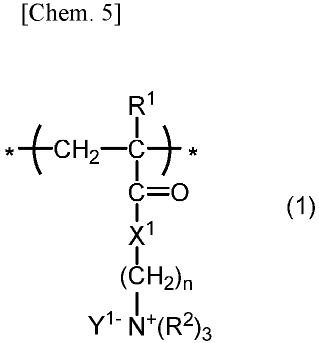 In the formula, an asterisk * has the same meaning as above.

In formula (1), R¹ is a hydrogen atom or a methyl group, and is preferably a hydrogen atom.

Each R² is independently a substituted or unsubstituted alkyl group of 1 to 6 carbon atoms or an aryl group of 6 to 18 carbon atoms.

The alkyl group of 1 to 6 carbon atoms represented by R² may be linear, branched or cyclic. Specific examples include methyl, ethyl, n-propyl, isopropyl, n-butyl, isobutyl, sec-butyl, tert-butyl, n-pentyl, n-hexyl and cyclohexyl groups.

Specific examples of the aryl group of 6 to 18 carbon atoms represented by R² include phenyl, biphenyl, naphthyl, anthryl (anthracenyl), phenanthryl, pyrenyl, napthacenyl, indenyl, azulenyl, fluorenyl and terphenyl groups.

Some or all of the hydrogen atoms bonded to carbon atoms on these alkyl groups and aryl groups may be substituted with halogen atoms such as chlorine, fluorine or bromine or with other substituents such as cyano groups. Specific examples of these substituted groups include chloromethyl, bromoethyl, trifluoropropyl, chlorophenyl, bromophenyl and cyanoethyl groups.

Of these, from the standpoint of enhancing the surface hydrophilicity of the film, R² is preferably an alkyl group of 1 to 3 carbon atoms or a phenyl group, more preferably a methyl group or ethyl group, and even more preferably a methyl group.

X¹ is -NH- or -O-. From the standpoint of enhancing the surface hydrophilicity and the hydrolysis resistance of the film, -NH- is preferred.

The letter 'n' is an integer from 1 to 6. From the standpoint of enhancing the surface hydrophilicity of the film, n is preferably an integer from 1 to 4, and more preferably an integer from 1 to 3.

Y¹⁻ may be any monovalent anion. However, from the standpoint of enhancing the surface hydrophilicity of the film, it is preferably a halogen anion (halide ion) or an alkyl sulfate anion (R^{a}-OSO₃⁻).

Specific examples of the halogen anion represented by Y¹⁻ include F⁻, Cl⁻, Br⁻ and I⁻.

The alkyl sulfate anion (R^{a}-OSO₃⁻) represented by Y¹⁻ is a monovalent anion obtained by linking an alkyl group with a sulfoxide anion. The alkyl group represented by R^{a} is preferably a substituted or unsubstituted alkyl group of 1 to 6 carbon atoms. Specific examples of the alkyl group include the same as those mentioned above for R².

Specific examples of alkyl sulfate anions include the methyl sulfate anion and the ethyl sulfate anion.

Of these, Cl⁻ and alkyl sulfate anions in which the alkyl group has from 1 to 3 carbon atoms are preferred; Cl⁻, the methyl sulfate anion and the ethyl sulfate anion are more preferred, and Cl⁻ is even more preferred.

Anions represented by formula (9) below are also suitable as Y¹⁻.

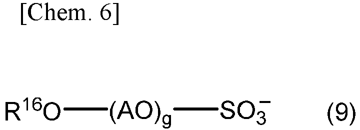

In formula (9), R¹⁶ is a substituted or unsubstituted linear or branched alkyl group of 12 to 14 carbon atoms.

Specific examples of the alkyl group represented by R¹⁶ include dodecyl (n-dodecyl, isododecyl, etc.), tridecyl (n-tridecyl, isotridecyl, etc.) and tetradecyl (n-tetradecyl, isotetradecyl, etc.) groups.

Some or all hydrogen atoms bonded to carbon atoms on these alkyl groups may be substituted with halogen atoms such as chlorine, fluorine or bromine, or with other substituents such as cyano groups.

Of these, from the standpoint of availability, dodecyl and tridecyl groups are preferred; tridecyl groups are more preferred. To further enhance the advantageous effects of the invention, the alkyl group of 12 to 14 carbon atoms in R¹⁶ is preferably linear. Therefore, in a preferred embodiment of the invention, R¹⁶ is a substituted or unsubstituted linear tridecyl group, and more preferably an unsubstituted linear tridecyl group.

A is a linear or branched alkylene group of 2 to 4 carbon atoms.

Specific examples of the alkylene group represented by A include ethylene, trimethylene, propylene (-CH₂-CH(CH₃)-), tetramethylene, 1-methyltrimethylene (-CH₂-CH₂-CH(CH₃)-), 2-methyltrimethylene (-CH₂-CH(CH₃)-CH₂-), dimethylethylene (-CH₂-C(CH₃)₂-) and ethylethylene (-CH₂-CH(CH₂CH₃)-) groups.

The letter 'g' is the average number of added moles of -(AO)-, which is a number from 2 to 50. From the standpoint of the surface hydrophilicity of the film and of enhancing the workability of the composition by lowering its viscosity, this is preferably a number from 2 to 30, more preferably a number from 2 to 20, and even more preferably a number from 2 to 10.

In formula (9), -(AO)_{g}- represents a polyoxyalkylene group. -(AO)_{g}- preferably includes two or more types of oxyalkylene groups, and more preferably includes an oxybutylene group (-C₄H₈O-). By including such groups, the hydrophilicity of the copolymer does not become too high and the affinity with organic solvents is good.

Moreover, the oxybutylene group may be branched and may include one or both of -CH(CH₂CH₃)-CH₂-O- and -CH₂-CH₂(CH₂CH₃)-O-. By including such a group, the affinity with organic solvents and the surface hydrophilicity of the film further improve.

In addition, -(AO)_{g}- preferably includes an oxyethylene group (-C₂H₄O-).

The ratio of oxybutylene groups in -(AO)_{g}- is preferably from 3 to 90 mol%, more preferably from 10 to 80 mol%, even more preferably from 20 to 50 mol%, and still more preferably from 30 to 40 mol%. When the oxybutylene groups have two or more different structures, the ratio of oxybutylene groups represents the sum of the ratios (wt%) for each structure.

In cases where -(AO)_{g}- includes two or more types of oxyalkylene groups, the arrangement thereof may be either random or a block-type arrangement. From the standpoint of further increasing the film surface hydrophilicity effect, a block-type arrangement is preferred. In the case of a block-type arrangement, the bocks may be arranged in any order. That is, for example, a polyoxyethylene chain and a polyoxybutylene chain may be linked in this order, or in the reverse order, to a sulfonic acid group.

Specific examples of anions represented by formula (9) include, but are not limited to, those of the following formulas.

CH₃(CH₂)₁₁O{(CH₂)₄O}₂{(CH₂)₂O}₅SO₃⁻

CH₃(CH₂)₁₁O{(CH₂)₄O}₃{(CH₂)₂O}₅SO₃⁻

CH₃(CH₂)₁₁O{(CH₂)₄O}₄{(CH₂)₂O}₅SO₃⁻

CH₃(CH₂)₁₁O{(CH₂)₄O}₅{(CH₂)₂O}₅SO₃⁻

CH₃(CH₂)₁₁O{(CH₂)₄O}₁₀{(CH₂)₂O}₁₅SO₃⁻

CH₃(CH₂)₁₁O{(CH₂)₄O}₁₀{(CH₂)₂O}₂₀SO₃⁻

CH₃(CH₂)₁₂O{(CH₂)₄O}₂{(CH₂)₂O}₅SO₃⁻

CH₃(CH₂)₁₂O{(CH₂)₄O₃{(CH₂)₂O}₅SO₃⁻

CH₃₍CH₂)₁₂O{(CH₂)₄O}₄{(CH₂)₂O}₅SO₃⁻

CH₃(CH₂)₁₂O{(CH₂)₄O}₅{(CH₂)₂O}₅SO₃⁻

CH₃(CH₂)₁₂O{(CH₂)₄O}₁₀{(CH₂)₂O}₁₅SO₃⁻

CH₃(CH₂)₁₂O{(CH₂)₄O}₁₀{(CH₂)₂O}₂₀SO₃⁻

Specific examples of the constitutional units (a) represented by formula (1) above include, but are not limited to, those of the following formulas. 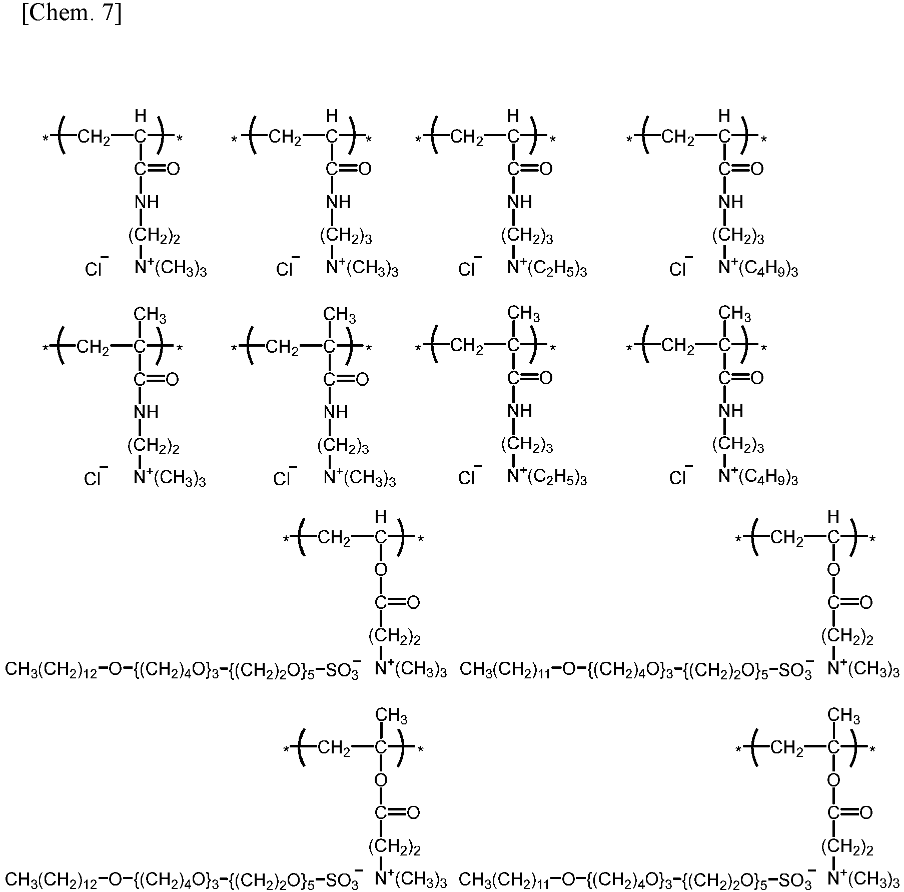 In these formulas, an asterisk * has the same meaning as above.

Constitutional unit (b) included in the hydrophilic copolymer used in this invention is represented by formula (2) below.

The hydrolyzable silyl group included in constitutional unit (b) either, in cases where the hydrophilic composition of the invention includes a curing agent, undergoes a crosslinking reaction with a functional group included in this curing agent or, in cases where the hydrophilic composition of the invention does not include a curing agent, is able to undergo a crosslinking reaction on its own (self-crosslinking). As a result of this, a hydrophilic copolymer-containing crosslinked structure forms within the film.

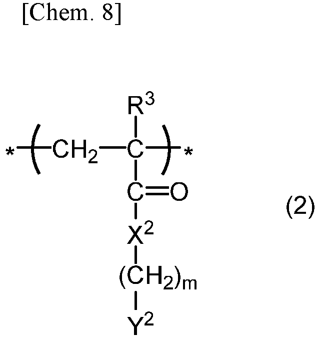

In these formulas, an asterisk * has the same meaning as above.

In formula (2), R³ is a hydrogen atom or a methyl group; a methyl group is preferred.

X² is -NH- or -O-; -O- is preferred.

Y² is a group selected from the group consisting of a hydrogen atom and hydroxyl, carboxyl, amino, isocyanate, epoxy, alkoxy (-OR) and hydrolyzable silyl groups.

In the alkoxy group (-OR) represented by Y², the alkyl group represented by R is exemplified by substituted or unsubstituted alkyl groups of 1 to 6 carbon atoms. Specific examples of the alkoxy group include methoxy, ethoxy, n-propoxy, i-propoxy, n-butoxy, sec-butoxy, t-butoxy, n-pentyloxy, n-hexyloxy, cyclopentyloxy and cyclohexyloxy groups. Some or all of the hydrogen atoms bonded to carbon atoms on the alkyl group represented by R may be substituted with halogen atoms such as chlorine, fluorine or bromine or with other substituents such as cyano groups.

Examples of the hydrolyzable silyl groups represented by Y² include alkoxysilyl groups such as trimethoxysilyl, triethoxysilyl, dimethoxysilyl, diethoxysilyl, monomethoxysilyl and monoethoxysilyl groups; carboxysilyl groups such as the acetoxysilyl group; halosilyl groups such as the trichlorosilyl, dichlorosilyl and monochlorosilyl groups; aminosilyl groups, oximesilyl groups and hydrosilyl groups.

Of these, Y² is preferably a hydrogen atom or a hydroxyl group.

The letter 'm' is an integer from 0 to 10, preferably an integer from 0 to 6, more preferably an integer from 1 to 4, and even more preferably an integer from 2 to 4. When m is 0, Y² is a hydrogen atom.

In the hydrophilic composition of the invention, by using together (A) a hydrophilic copolymer and (B) a blocked isocyanate silane and carrying out heating treatment, a crosslinked structure of the blocked isocyanate silane and the copolymer can be formed. Alternatively, by using together, for example, a hydrophilic copolymer and a curing catalyst such as an acid catalyst, the copolymer itself can undergo a crosslinking reaction (self-crosslinking). Therefore, a film formed from the composition containing a hydrophilic copolymer and a curing agent has a crosslinked structure and can exhibit excellent water resistance.

Given the above, in formula (2), Y² is more preferably a hydroxyl group.

Specific examples of the constitutional unit (b) represented by above formula (2) include, but are not limited to, those of the following formulas. 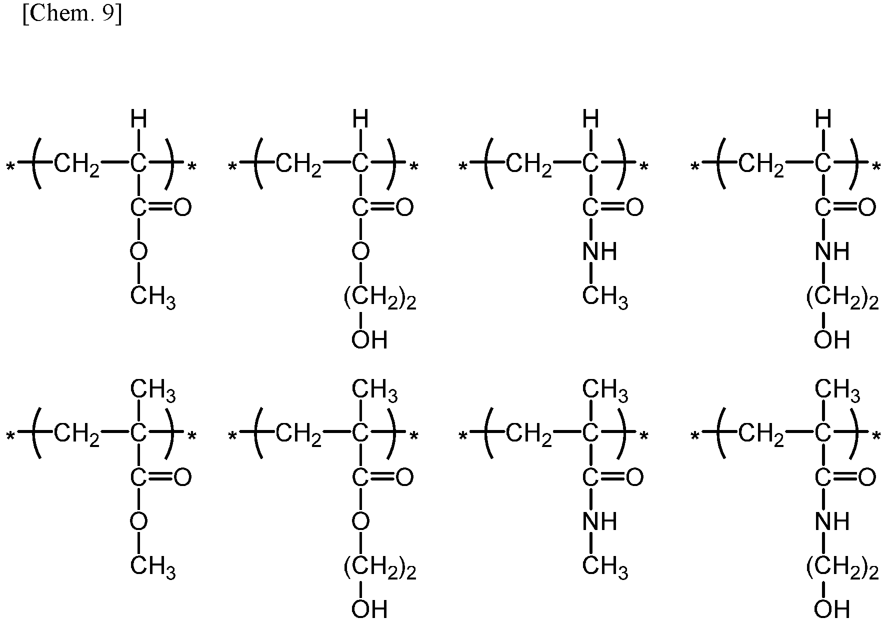 In these formulas, an asterisk * has the same meaning as above.

In the hydrophilic copolymer used in this invention, the constitutional unit (a) content is preferably from 5 to 60 wt%, more preferably from 10 to 50 wt%, and even more preferably from 15 to 40 wt%. At a constitutional unit (a) content below 5 wt%, the hydrophilicity of the copolymer is inadequate and, when the hydrophilic composition is rendered into a film, the surface hydrophilicity of the film sometimes decreases. On the other hand, at a constitutional unit (a) content greater than 60 wt%, because the hydrophilicity of the copolymer becomes too high, when the hydrophilic composition is rendered into a film, the water resistance of the film sometimes decreases.

Also, in the hydrophilic copolymer of the invention, the total content of constitutional units (a) and constitutional units (b) is preferably 30 wt% or more, more preferably 35 wt% or more, and even more preferably 40 wt% or more. At a total content of constitutional units (a) and constitutional units (b) below 30 wt%, the degree of contribution to the hydrophilicity factor by the constitutional units (a) becomes small and, when the hydrophilic composition is rendered into a film, the surface hydrophilicity of the film sometimes decreases. There is no particular upper limit, it being possible for the hydrophilic copolymer to consist solely of constitutional units (a) and (b), although the total content of constitutional units (a) and (b) is preferably 80 wt% or less, more preferably 70 wt% or less, and even more preferably 65 wt% or less.

In addition to the above constitutional units, the hydrophilic copolymer used in this invention may also include, for example, constitutional units of formula (3) below within a range that does not compromise the object of this invention. 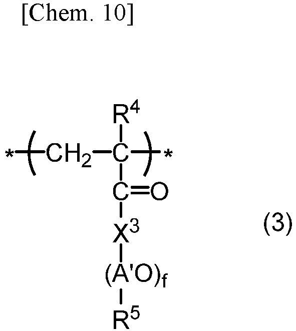 In these formulas, an asterisk * has the same meaning as above.

In formula (3), R⁴ is a hydrogen atom or a methyl group; a methyl group is preferred.

X³ is -NH- or -O-; -O- is preferred.

A' is an alkylene group of 1 to 6 carbon atoms. Specific examples include methylene, ethylene, trimethylene, tetramethylene, pentamethylene and hexamethylene.

Of these, an alkylene group of 1 to 3 carbon atoms is preferred. An ethylene group is more preferred.

R⁵ is an alkyl group of 1 to 6 carbon atoms. Specific examples include the same groups as those mentioned above for R². Of these, a methyl group is preferred.

The letter 'f' is an integer from 1 to 10, preferably an integer from 2 to 8, and more preferably an integer from 3 to 6.

In the invention, in cases where the hydrophilic copolymer includes other constitutional units, the total content thereof is preferably 70 wt% or less, more preferably 60 wt% or less, and even more preferably from 5 to 50 wt%.

The various constitutional units included in the hydrophilic copolymer may be arranged in any order. That is, the hydrophilic copolymer may be an alternating copolymer, a random copolymer or a block-type copolymer.

In this invention, from the standpoint of increasing the affinity to organic solvents and the hardness of the film, the hydrophilic copolymer has a weight-average molecular weight of preferably from 1,000 to 50,000, more preferably from 5,000 to 40,000, even more preferably from 10,000 to 30,000, and still more preferably from 15,000 to 20,000. The weight-average molecular weight is a value determined by gel permeation chromatography (GPC) using polyethylene glycol/polyethylene oxide as the reference material.

From the standpoint of the compatibility with organic solvents and the workability, the hydrophilic copolymer has a viscosity of preferably from 0.01 to 0.5 Pa·s (temperature, 25°C). The viscosity is a value measured with a rotational viscometer.

The hydrophilic copolymer has a glass transition temperature of preferably from -10°C to 50°C. The glass transition temperature is a value measured in accordance with JIS K7121.

A commercial product may be used as the hydrophilic copolymer employed in this invention. An example of such a product is Acrit 1WX from Taisei Fine Chemical Co., Ltd.

### [B] Blocked Isocyanate Silane Compound

The blocked isocyanate silane compound serving as component (B) is an ingredient that acts as a curing agent for the hydrophilic copolymer. In this invention, an organosilicon compound having a blocked isocyanate group represented by formula (4) below is preferred.

Apart from simply a blocked isocyanate silane, a structure in which a portion of the hydrolyzable silyl moiety is hydrolyzed and also a partial hydrolytic condensate obtained by intermolecular condensation of the blocked isocyanate silane to form an oligomer also manifest a similar performance and may therefore be used as the curing agent ingredient in this invention.

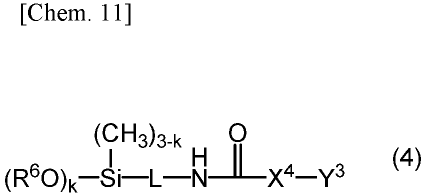

In formula (4), each R⁶ is independently an alkyl group of 1 to 8 carbon atoms, L is a divalent linking group, X⁴ represents -O- or -NR⁷, Y³ is a hydrogen atom or a monovalent organic group, R⁷ is a hydrogen atom, an alkyl group of 1 to 8 carbon atoms or a group which is able to bond with Y³ and form a ring structure, and k is an integer from 1 to 3.

The alkyl group of 1 to 8 carbon atoms represented by R⁶ may be linear, branched or cyclic. Specific examples include methyl, ethyl, n-propyl, isopropyl, n-butyl, isobutyl, tert-butyl, n-pentyl, neopentyl, n-hexyl, cyclohexyl, n-heptyl and n-octyl groups. Of these, methyl and ethyl groups are preferred.

Specific examples of the divalent linking group represented by L include alkylene groups, -O-, -S-, -NR-, CO-, -COO-, -NRCO-, -SO₂ and combinations of these. Here, R is a hydrogen atom or an alkyl group of 1 to 4 carbon atoms; a hydrogen atom is preferred. Examples of the alkyl group include, of the alkyl groups mentioned above, those having from 1 to 4 carbon atoms.

Of these, in terms of the availability of the starting materials when synthesizing the organosilicon compound, the divalent linking group is preferably an alkylene group of the formula -(CH₂)ₙ- (where n is an integer from 1 to 10, preferably from 1 to 6, and more preferably from 1 to 4) or a group in which one or more methylene unit of this alkylene group -(CH₂)ₙ- is substituted with -O-, -S-, -NH-, -CO- or -COO-, and more preferably -(CH₂)₃- (trimethylene group).

X⁴ is -O- or -NR⁷-, this being a group which forms part of the protecting group on the blocked isocyanate silane compound. Because this group is eliminated on heating, it is not particularly limited.

In the -NR⁷- moiety represented by X⁴, R⁷ is a hydrogen atom, an alkyl group of 1 to 8 carbon atoms, or a group that is able to bond with Y³ and form a ring structure.

The alkyl group of 1 to 8 carbon atoms represented by R⁷ is exemplified by the same groups as mentioned above in connection with R⁶. Of these, linear or branched alkyl groups of 1 to 5 carbon atoms are preferred; methyl and ethyl groups are more preferred.

When R⁷ in -NR⁷- represents a group that is able to bond with Y³ and form a ring structure, -NR⁷- forms a nitrogen-containing heterocyclic structure with Y³ in formula (1). Such a heterocyclic structure preferably includes two or more nitrogen atoms, and more preferably includes two nitrogen atoms. The heterocyclic structure is preferably a 5-membered or 6-membered ring structure, with a 5-membered ring structure being more preferred. Preferred examples of such heterocyclic structures include an imidazole ring, a pyrazole ring, a 1,2,3-triazole ring and a 1,2,4-triazole ring. A pyrazole ring is more preferred.

The above ring structures may have substituents such as alkyl groups of 1 to 20 carbon atoms, aryl groups of 6 to 20 carbon atoms, carboxyl groups, hydroxyl groups, ester groups and oxo groups (=O).

Suitable ring structures include, but are not limited to, those shown below.

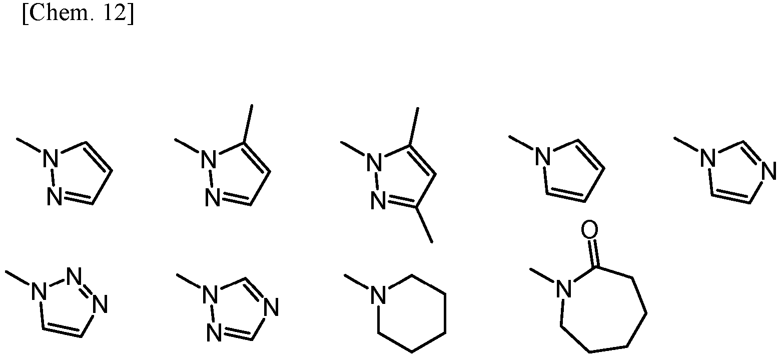

Y³ is a hydrogen atom or a monovalent organic group, this being a group which forms part of the protecting group on the blocked isocyanate silane compound. Because this group is eliminated on heating, it is not particularly limited.

Specific examples of the monovalent organic group represented by Y³ include monovalent hydrocarbon groups which may have a substituent of 1 to 20 carbon atoms, the -OH group (excluding cases where X is -O-) and N=R¹⁷ (wherein R¹⁷ is an alkylidene group of 1 to 10 carbon atoms which may be substituted with an aryl group of 6 to 20 carbon atoms).

The above monovalent hydrocarbon group of 1 to 20 carbon atoms may be linear, branched or cyclic, and is exemplified by alkyl groups of 1 to 20 carbon atoms, aryl groups of 6 to 20 carbon atoms and aralkyl groups of 7 to 20 carbon atoms.

Specific examples of the above alkyl groups include, in addition to the groups mentioned earlier with respect to R⁶, the n-nonyl, n-decyl, undecyl, dodecyl, tridecyl and icosyl groups.

Specific examples of the above aryl groups include phenyl and naphthyl groups. Specific examples of the above aralkyl groups include benzyl and phenylethyl groups. At least some of the hydrogen atoms on these groups may be substituted with other substituents. Examples of such other substituents include carboxyl, ester and hydroxyl groups.

The alkylidene group of 1 to 10 carbon atoms represented by R¹⁷ which may be substituted with an aryl group or heteroaryl group of 6 to 20 carbon atoms may be linear, branched or cyclic. Specific examples include methylidene, phenylmethylidene, diphenylmethylidene, ethylidene, propylidene, propan-2-ylidene, butylidene, butan-2-ylidene, pentylidene, 4-methylpentan-2-ylidene, hexylidene, cyclohexylidene, heptylidene, octylidene, nonylidene and decylidene groups.

Specific examples of aryl groups of 6 to 20 carbon atoms include groups similar to those mentioned above for Y³.

Specific examples of heteroaryl groups of 6 to 20 carbon atoms include pyrrol-1-yl, 1H-pyrrol-2-yl, imidazol-1-yl, imidazol-2-yl, pyrazol-1-yl, pyrazol-3-yl, pyridin-2-yl and pyridin-3-yl groups.

In particular, the blocked isocyanate silane compound represented by above formula (4) is preferably one of formula (5) or (6) below 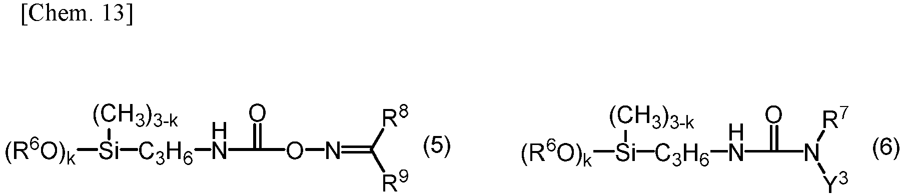 (wherein R⁶, R⁷, Y³ and k have the same meanings as above).

R⁸ and R⁹ are each independently a hydrogen atom or a monovalent organic group, and R⁸ and R⁹ or R⁷ and Y³ may bond with each other to form a ring structure.

The monovalent organic groups of R⁸ and R⁹ are exemplified by monovalent hydrocarbon groups of 1 to 20 carbon atoms and heteroaryl groups of 6 to 20 carbon atoms.

Specific examples of the monovalent hydrocarbon group of 1 to 20 carbon atoms include the same groups as those mentioned above for Y³; alkyl groups of 1 to 20 carbon atoms and aryl groups of 6 to 20 carbon atoms are preferred. Specific examples of these too include the same groups as those mentioned above.

The heteroaryl group of 6 to 20 carbon atoms is exemplified by the same groups as those mentioned above for R¹⁷.

Ring structures formed by R⁸ and R⁹ bonding with each other include a cyclopentane ring and a cyclohexane ring.

These hydrocarbon groups and heteroaryl groups may have substituents. Specific examples of substituents include carboxyl groups, hydroxyl groups and ester groups.

Groups represented by R⁸-methylidene-R⁹ are exemplified by the alkylidene groups mentioned above for R¹⁷. Of these, diphenylmethylidene, propan-2-ylidene, butan-2-ylidene, 4-methylpentan-2-ylidene and cyclohexylidene groups are preferred.

Specific examples of R⁷ and Y³ include the same as those mentioned above. In particular, it is preferable for these to mutually bond and form, together with a nitrogen atom, a ring structure. The ring structure is preferably a 5-membered or 6-membered ring, with a 5-membered ring being more preferred.

This ring structure preferably has two nitrogen atoms. An imidazole ring, pyrazole ring, 1,2,3-triazole ring or 1,2,4-triazole ring is more preferred. A pyrazole ring is even more preferred.

The above ring structure may have substituents such as alkyl groups of 1 to 20 carbon atoms, aryl groups of 6 to 20 carbon atoms, a carboxyl group, a hydroxyl group, an ester group or an oxo group (=O).

Suitable ring structures include, but are not limited to, those shown below.

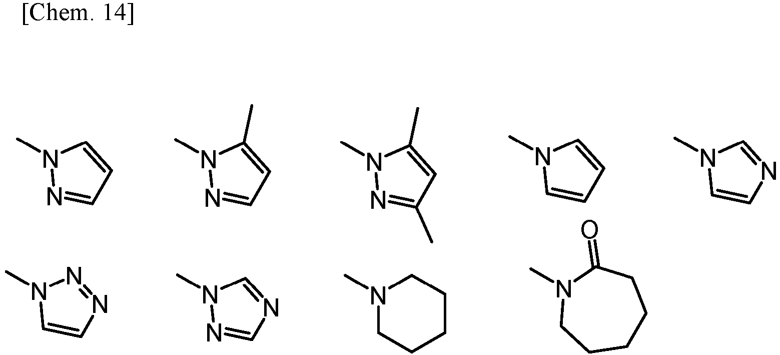

Specific preferred examples of the blocked isocyanate silane compound of component (B) include, but are not limited to, the following compounds.

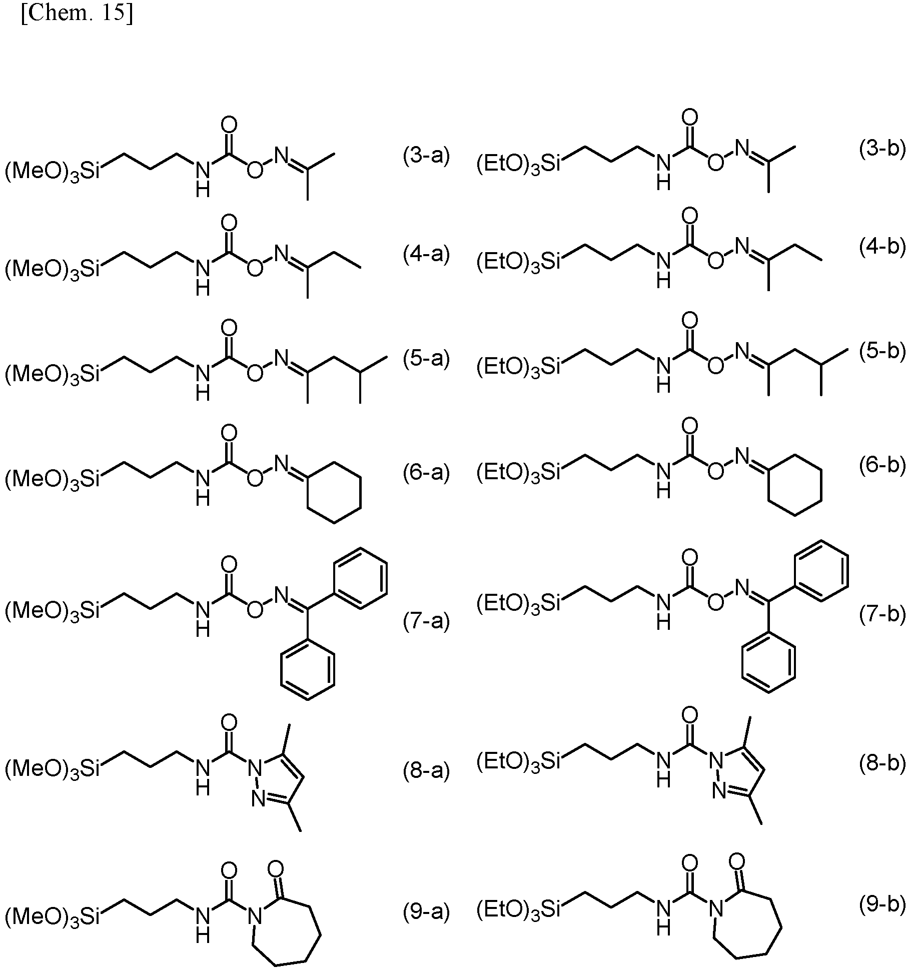

The hydrophilic composition of the invention (also referred to below as simply "the composition") includes above components (A) and (B). Specifically, from 0.001 to 10 parts by weight of component (B) is included per 100 parts by weight of component (A).

When the component (B) content is below the lower limit value, the desired water resistance-enhancing effect does not appear; when it exceeds the upper limit value, the advantageous effects are saturated and the cost effectiveness decreases, in addition to which the influence of the water repellency inherent to silane coupling agents increases and the hydrophilicity tends to decrease.

The component (A) content included in the hydrophilic composition of the invention is not particularly limited. However, from the standpoint of the hydrophilicity, the content is preferably from 1 to 40 wt%, and more preferably from 10 to 25 wt%, of the overall composition.

The hydrophilic composition of the invention may optionally include other ingredients, within ranges that do not compromise the object of the invention. It is especially preferable to include a curing agent.

A curing agent promotes the crosslinking reaction in the above hydrophilic copolymer, contributing to formation of a crosslinked structure at the film interior. A curing agent may or may not be incorporated at this time within the crosslinked structure.

**In** cases where a curing agent is incorporated into the crosslinked structure, it preferably has a functional group or structure that undergoes a crosslinking reaction with a functional group included on a side chain of the hydrophilic copolymer (specifically, functional group Y² included in constitutional unit (b) or the alkoxysilyl group in component (B)). The crosslinking mode at this time may be covalent bonding, ionic bonding, hydrogen bonding or ligand bonding; covalent bonding is preferred.

The curing agent incorporated into the crosslinked structure is preferably one having on the molecule a functional group such as a hydrolyzable silyl group, isocyanate group, epoxy group, carbodiimide group, oxazolyl group, epoxy groups, hydroxyl group, carboxyl group or amino group; a molecular structure such as a siloxane structure or melamine structure; a metal ion or the like.

Suitable combinations of a pendant functional group on the hydrophilic copolymer that is capable of a crosslinking reaction and a curing agent functional group or structure include, for example, those shown in Table 1.

**[Table 1]**

| Pendant functional group on hydrophilic copolymer | Curing agent functional group or structure |
|---|---|
| hydrolyzable silyl group | hydrolyzable silyl group, siloxane structure |
| hydroxyl group | isocyanate group, melamine structure |
| carboxyl group | epoxy group, carbodiimide group, oxazoline group, metal ion |
| amino group | epoxy group |
| isocyanate group | hydroxyl group |
| epoxy group | carboxyl group, amino group |

The curing agent having a hydrolyzable silyl group is exemplified by compounds having a hydrolyzable silyl group or a siloxane structure that includes a hydrolyzable silyl group. Specific examples include compounds of formula (7) below, compounds of formula (8) below, and hydrolytic condensates of compounds of formula (8).

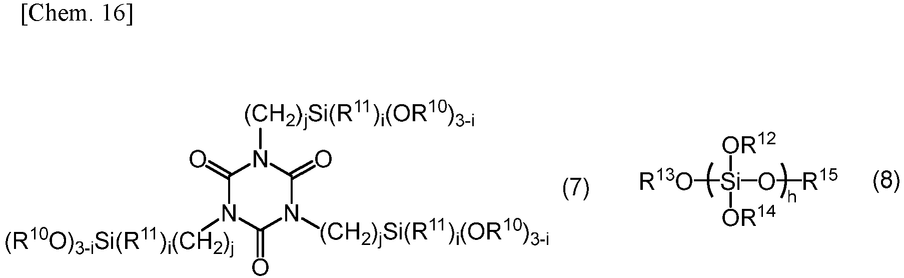

In formula (7), R¹⁰ and R¹¹ are each independently an alkyl group of 1 to 10 carbon atoms, preferably 1 to 8 carbon atoms, more preferably 1 to 6 carbon atoms, or an aryl group of 6 to 10 carbon atoms, preferably 6 to 8 carbon atoms.

The alkyl group of R¹⁰ and R¹¹ may be linear, branched or cyclic. Specific examples include methyl, ethyl, n-propyl, isopropyl, n-butyl, isobutyl, s-butyl, t-butyl, n-pentyl, n-hexyl and cyclohexyl groups.

Specific examples of the aryl groups of R¹⁰ and R¹¹ include phenyl and tolyl groups.

Of these, R¹⁰ is preferably an alkyl group of 1 to 3 carbon atoms, and more preferably a methyl or ethyl group. R¹¹ is preferably an alkyl group of 1 to 3 carbon atoms, and more preferably a methyl group.

In formula (7), j is an integer from 1 to 10, preferably an integer from 1 to 6, more preferably an integer from 1 to 4, and even more preferably an integer from 2 to 4.

The letter 'i' is an integer from 1 to 3, and is preferably 3.

Specific examples of the compound of formula (7) include, but are not limited to, N,N,N-tris(trimethoxysilylpropyl) isocyanurate and N,N,N-tris(triethoxysilylpropyl) isocyanurate.

In formula (8), R¹², R¹³, R¹⁴ and R¹⁵ are each independently a hydrogen atom or a monovalent organic group of 1 to 6 carbon atoms.

In formula (8), the monovalent organic groups of 1 to 6 carbon atoms represented by R¹², R¹³, R¹⁴ and R¹⁵ may be linear, branched or cyclic, and are exemplified by alkyl groups of 1 to 6 carbon atoms and alkenyl groups of 2 to 6 carbon atoms.

Specific examples of alkyl groups of 1 to 6 carbon atoms include methyl, ethyl, propyl, isopropyl, n-butyl, tert-butyl, n-pentyl, n-hexyl and cyclohexyl groups.

Specific examples of alkenyl groups of 2 to 6 carbon atoms include vinyl and allyl groups.

Of these, from the standpoint of hydrolyzability, the monovalent organic groups of 1 to 6 carbon atoms represented by R¹², R¹³, R¹⁴ and R¹⁵ are preferably alkyl groups of 1 to 4 carbon atoms, and more preferably methyl or ethyl groups.

In formula (8), h is an integer from 1 to 20, preferably an integer from 3 to 12, and more preferably an integer from 5 to 12. By having h be 20 or less, the viscosity when the hydrophilic composition is rendered into a coating liquid does not become too high, enabling a highly uniform fog-resistant film to be formed. By having h be 1 or more, the reactivity of the compound of formula (5) is easily controlled, enabling a fog-resistant film of excellent hydrophilicity to be formed.

In this invention, "hydrolytic condensates of compounds of formula (8)" refers to compounds having a structure in which a siloxane bond (Si-O-Si) has formed on at least one of the moieties Si-OR¹², Si-OR¹³, Si-OR¹⁴ and Si-OR¹⁵ in a compound of formula (8). Condensates of compounds of formula (8) can be formed by, for example, the mutual condensation or hydrolytic condensation of two or more molecules of a compound of formula (8). Hydrolytic condensation is described below using by way of illustration a case in which R¹², R¹³, R¹⁴ and R¹⁵ in formula (8) are methyl groups (-CH₃). In one example of hydrolytic condensation, Si-OH forms by the hydrolysis of Si-OCH₃, following which Si-O-Si forms by the dehydrative condensation of Si-OH.

The structure of the hydrolytic condensate of the compound represented by formula (8) is not particularly limited, and is exemplified by random, linear, ladder and cage structures.

In the compound of formula (8) and hydrolytic condensates thereof, when hydrogen atoms are included in R¹², R¹³, R¹⁴ and R¹⁵, these hydrogen atoms may be hydrogen atoms included in compounds added as starting materials during production of the compound of formula (8) or may be hydrogen atoms introduced by hydrolysis. That is, when at least one of R¹², R¹³, R¹⁴ and R¹⁵ in formula (8) is a hydrogen atom, at least one Si-OH group in formula (8) may be a Si-OH group included in a compound added as a starting material during production of the compound of formula (8) or may be a Si-OH group formed by hydrolysis.

The compound of formula (8) may be a commercial product. The compound of formula (8) is available as, for example, MKC^{®} Silicate (e.g., MS51, MS56) from Mitsubishi Chemical Corporation.

The compound of formula (8) has a weight-average molecular weight (Mw) of preferably from 300 to 1,500, and more preferably from 500 to 1,200. The weight-average molecular weight is a value determined by gel permeation chromatography (GPC) using polyethylene glycol/polyethylene oxide as the reference material.

Curing agents having an isocyanate group are exemplified by aliphatic, alicyclic and aromatic polyisocyanates.

Specific examples include isophorone diisocyanate, hexamethylene diisocyanate, xylylene diisocyanate, tolylene diisocyanate, polymeric MDI, naphthalene diisocyanate, tetramethylxylylene diisocyanate, trimethylhexamethylene diisocyanate, lysine diisocyanate methyl ester, hydrogenated xylylene diisocyanate, diphenylmethane diisocyanate, methylenebis(4,1-cyclohexylene) diisocyanate, 1,3-bis(isocyanatomethyl)cyclohexane, and isocyanate derivatives such as adducts of a diisocyanate compound and a polyol compound such as trimethylolpropane, and biurets and isocyanurates of diisocyanate compounds.

Of these, to suppress yellowing of the film, a polyisocyanate derived from hexamethylene diisocyanate is preferred.

Curing agents having an isocyanate group are available as commercial products. Examples of commercial products that may be used include Duranate^{®} TPA-100, TKA-100, 24A-100, 22A-75P and P301-75E from Asahi Kasei Corporation; Coronate^{®} HX, HK and 2715 from Tosoh Corporation; and Takenate^{®} 500 and 600 from Mitsui Chemicals, Inc.

One of these may be used alone or two or more may be used together.

Curing agents having a melamine structure are preferably melamine resins. Specific examples include condensation products of a melamine, such as guanamine, melamine, N-butylmelamine, N-phenylmelamine, N,N-diphenylmelamine, N,N-diallylmelamine, N,N',N"-triphenylmelamine, N,N',N"-trimethylolmelamine, benzoguanamine, 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine or ammeline (N,N,N',N'-tetracyanoethylbenzoguanamine), with formaldehyde and an alcohol (e.g., methanol).

Curing agents having a melamine structure are available as commercial products. Examples of commercial products that may be used include U-VAN^{®} 20SE and 225 from Mitsui Chemicals, Inc.; and Amidir^{®} L-117-60, L-109-65, 47-508-60, L-118-60, G821-60 and J820-60 from DIC Corporation.

One of these may be used alone or two or more may be used together.

Curing agents having an epoxy group are exemplified by aliphatic, alicyclic and aromatic diepoxy compounds and triepoxy compounds.

Specific examples include 2,2-bis(4-hydroxyphenyl)propane diglycidyl ether (bisphenol A diglycidyl ether), ethylene glycol diglycidyl ether, triglycidyl isocyanurate, bisphenol A epoxy resins, bisphenol F epoxy resins, naphthalene epoxy resins, biphenyl epoxy resins, phenolic novolac epoxy resins, 1,5-hexadiene diepoxide, 1,4-pentadiene diepoxide, 1,2:6,7-diepoxyheptane, 1,2:8,9-diepoxynonane, 2,2'-(1,6-hexanediyl)bisoxirane, 1,2:7,8-diepoxyoctane, 1,5-diepoxycyclohexane, 1,2:3,4-diepoxycyclohexane, 1,2:5,6-diepoxycyclooctane, limonene dioxide, cis-1,2:4,5-diepoxy-p-menthane, 1,6-diepoxynaphthalene and triepoxydecane.

One of these may be used alone or two or more may be used together.

Curing agents having an amino group are exemplified by aliphatic, alicyclic and aromatic diamines, triamines and tetramines containing primary amines or secondary amines.

Specific examples include hexamethylenediamine, heptamethylenediamine, octamethylenediamine, nonamethylenediamine, 2-methyl-1,5-diaminopentane, 3,3-dimethylbutane-1,2-diamine, 4-methylpentane-1,2-diamine, 2,2,4,4-tetramethylcyclobutane, 2-methylcyclohexane-1,3-diamine, 2,4-diaminotoluene, 2,5-diaminotoluene, 2,6-diaminotoluene, 3,4-diaminotoluene, 2,3-diaminotoluene, 2,5-dimethylbenzene-1,2-diamine, 3,4-dimethylbenzene-1,2-diamine, 2,6-dimethybenzene-1,4-diamine, 2,4-dimethylbenzene-1,3-diamine, 3,5-dimethyl-1,2-benzenediamine, 4-ethylbenzene-1,3-diamine, 2,5-dimethylbenzene-1,4-diamine, 4-methoxybenzene-1,3-diamine, 4-(1,1-dimethylethyl)-1,2-benzenediamine, p-phenylenediamine, o-phenylenediamine, N-isopropyl-1,3-propanediamine, N-hexylethylenediamine, 5-isopropylaminoamylamine, n-butylethylenediamine, N-tert-butylbutane-1,4-diamine, N-ethylhexane-1,6-diamine, n-isobutylethane-1,2-diamine, N-cyclohexyl-1,2-ethanediamine, N-1-methylcyclohexane-1,4-diamine, N-methylbenzene-1,2-diamine, N-phenylethylenediamine, n-ethylbenzene-1,2-diamine, N-1-methylbenzene-1,3-diamine, 4-amino-N-methylaniline, 2-aminodiphenylamine, 4-aminodiphenylamine, N-1,4-dimethylbenzene-1,2-diamine, N-1,5-dimethylbenzene-1,2-diamine, N-isopropylbenzene-1,2-diamine, N-(3-aminophenyl)-N-phenylamine, N,N'-dimethyltrimethylenediamine, N,N'-diethylbutylenediamine, N,N'-diisopropyl-2,3-butanediamine, N,N'-diethyl-2-butene-1,4-diamine, N,N'-diisopropylethylenediamine, N-propyl-N'-isopropylethylenediamine, N,N'-dimethylbutane-1,4-diamine, N,N'-diethyl-1,3-propanediamine, N,N'-diethylethylenediamine, (1R,2R)-1-N,2-N-dimethylcyclohexane-1,2-diamine, N,N'-dimethyl-1,2-cyclohexanediamine, 1-N,4-N-dimethylcyclohexane-1,4-diamine, 1,4-benzenediamine, 1,2,4-triaminobenzene, 2,4,5-triaminotoluene, 2,4,6-triaminotoluene, 2,3,4-triaminotoluene, 3,5,6-triaminotoluene, 3-N-methylbenzene-1,2,3-triamine, 2-N-methylbenzene-1,2,3-triamine, 4-N-methylbenzene-1,2,4-triamine, 1-N-methylbenzene-1,2,4-triamine, 3-N-methylbenzene-1,3,5-triamine, 1-N',1-N"-diethylpropane-1,1,1-triamine, 4-(3,4-diaminophenyl)benzene-1,2-diamine, 1-N,1-N,2-N,2-N,3-N,3-N,4-N,4-N-octamethylbutane-1,2,3,4-tetraamine and 4-[3-amino-4-(methylamino)phenyl]benzene-1,2-diamine.

One of these may be used alone or two or more may be used together.

Examples of curing agents having a carbodiimide group include dicyclohexylcarbodiimide, diisopropylcarbodiimide, dimethylcarbodiimide, diisobutylcarbodiimide, dioctylcarbodiimide, t-butylisopropylcarbodiimide, diphenylcarbodiimide, di-t-butylcarbodiimide, di-β-naphthylcarbodiimide and N-isopropyl-N'-[2-(methacryloyloxy)ethyl]carbodiimide.

One of these may be used alone or two or more may be used together.

Examples of curing agents having an oxazoline group include 2,2'-bis(2-oxazoline), 2,2'-isopropylidenebis(4-phenyl-2-oxazoline), 1,3-bis(4,5-dihydro-2-oxazolyl)benzene and 1,4-bis(4,5-dihydro-2-oxazolyl)benzene.

One of these may be used alone or two or more may be used together.

Curing agents having a metal ion are exemplified by organoaluminum compounds such as aluminum ethylacetoacetate diisopropylate.

Of these, from the standpoint of the ease of handling, a curing agent having an isocyanate group or a melamine structure is preferred, combining a hydrophilic copolymer containing constitutional units (b) in which Y² is a hydroxyl group with a curing agent having an isocyanate group or a melamine structure is more preferred, and combining a hydrophilic copolymer containing constitutional groups (b) in which Y² is a hydroxyl group with a polyisocyanate or a melamine resin is even more preferred.

That is, a preferred embodiment of the invention is a hydrophilic composition containing the hydrophilic copolymer of the invention and, as the above curing agent, a polyisocyanate or a melamine resin. Of this, in cases where a hydrophilic copolymer containing constitutional units (b) in which Y² is a hydroxyl group and a curing agent having isocyanate groups (a polyisocyanate) are combined, the crosslinking reactions proceed under low-temperature conditions (e.g., 110°C or below), making it possible to form a film of the inventive composition even on a substrate having a low heat resistance, which is especially preferred.

Curing agents not incorporated into the crosslinked structure (curing catalysts) are exemplified by inorganic acids, organic acids, organometallic salts and Lewis acids.

Examples of inorganic acids include hydrochloric acid, sulfuric acid, nitric acid, phosphoric acid, nitrous acid, perchloric acid and sulfamic acid,

Examples of organic acids include formic acid, acetic acid, propionic acid, butyric acid, oxalic acid, succinic acid, maleic acid, lactic acid, p-toluenesulfonic acid and citric acid.

Examples of organometallic salts include lithium hydroxide, sodium hydroxide, potassium hydroxide, n-hexylamine, dimethylamine, tributylamine, diazabicycloundecene, ethanolamine acetate, dimethylaniline formate, tetraethylammonium benzoate, sodium acetate, potassium acetate, sodium propionate, potassium propionate, sodium formate, potassium formate, benzoyltrimethylammonium acetate, tetramethylammonium acetate and tin octanoate.

Examples of Lewis acids include tetraisopropyl titanate, tetrabutyl titanate, aluminum triisobutoxide, aluminum triisopropoxide, aluminum acetylacetonate, tin chloride (SnCl₄), titanium chloride (TiCl₄) and zinc chloride (ZnCl₄).

**In** addition, alkyltin ester compounds such as dibutyltin diacetate, dibutyltin dilaurate, dioctyltin dilaurate, dibutyltin dioctoate, dioctyltin dioctoate and dioctyltin diversatate may also be suitably used.

One of these may be used alone or two or more may be used together.

Curing agents that are incorporated into the crosslinked structure and curing agents that are not incorporated into the crosslinked structure (curing catalysts) may be suitably combined and used together.

When a curing agent is included in the hydrophilic composition of the invention, the content thereof per 100 parts by weight of the hydrophilic copolymer is preferably from 0.05 to 50 parts by weight, and more preferably from 0.1 to 10 parts by weight.

The hydrophilic composition of the invention preferably includes also a hydrophilic organosilicon compound of formula (10) below and/or a hydrolytic condensate thereof.

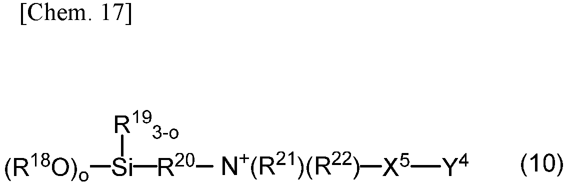

In formula (10), R¹⁸ and R¹⁹ are each independently an alkyl group of 1 to 10 carbon atoms, preferably 1 to 8 carbon atoms, and more preferably 1 to 6 carbon atoms, or an aryl group of 6 to 10 carbon atoms, preferably 6 to 8 carbon atoms. Specific examples of these alkyl groups and aryl groups include the same ones as mentioned above in connection with Y³. Of these, methyl groups are preferred.

R²⁰ is a divalent organic group that includes an aromatic ring of 6 to 14 carbon atoms, preferably 6 to 10 carbon atoms, and is preferably a divalent organic group containing an aromatic hydrocarbon ring, more preferably a divalent organic group containing a benzene ring or naphthalene ring, and even more preferably an arylene group or aralkylene group containing a benzene ring or a naphthalene ring.

Specific examples of the arylene group of R²⁰ include 1,2-phenylene, 1,3-phenylene, 1,4-phenylene and naphthylene groups.

Specific examples of the aralkylene group of R²⁰ include methylenephenylene, ethylenephenylene, methylenephenylenemethylene and ethylenephenyleneethylene groups.

Of these, R¹⁸ is preferably a phenylene group, and more preferably a 1,4-phenylene group.

R²¹ and R²² are each independently an alkyl group of 1 to 6 carbon atoms. Specific examples include the same groups as mentioned above in connection with R⁶ which have 1 to 6 carbon atoms. Of these, methyl groups are preferred.

X⁵ is an alkylene group of 1 to 10 carbon atoms, preferably 1 to 8 carbon atoms, and more preferably 1 to 6 carbon atoms.

The alkylene group of X⁵ may be linear, branched or cyclic. Specific examples include methylene, ethylene, trimethylene, propylene, tetramethylene, pentamethylene, hexamethylene and cyclohexylene groups.

Of these, X⁵ is preferably a methylene, ethylene or trimethylene group, and more preferably a trimethylene group.

Y⁴ represents COO⁻, SO₃⁻ or PO₄⁻. In terms of the durability of the film that is obtained, SO₃⁻ is preferred.

The letter 'o' is an integer from 1 to 3, although 3 is preferred.

Specific, nonlimiting, examples of such hydrophilic organosilicon compounds are shown below. Of these, the compound of formula (11) is preferred. 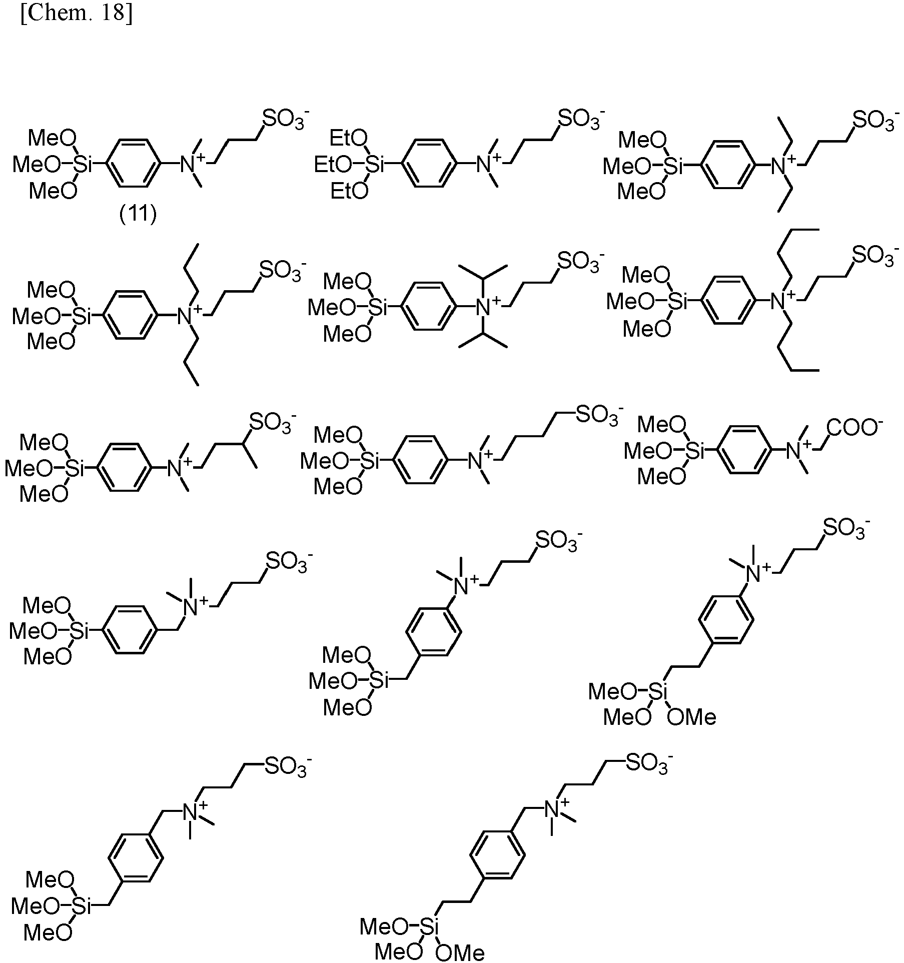 In these formulas, Me stands for a methyl group and Et stands for an ethyl group.

In cases where a hydrophilic organosilicon compound is used, the content thereof in the hydrophilic composition of the invention is preferably from 0.01 to 10 parts by weight, and more preferably from 0.1 to 1 part by weight, per 100 parts by weight of the hydrophilic copolymer.

The hydrophilic composition of the invention may optionally include a solvent. The solvent is not particularly limited, provided that it can dissolve or disperse the hydrophilic copolymer and also, as the case may be, curing agents, hydrophilic organosilicon compounds and other additives, does not react with the various ingredients, and can be easily removed in the subsequently described drying step.

Specific examples of the solvent include methanol, ethanol, isopropanol, tetrahydrofuran, cyclohexanone, methyl ethyl ketone, ethylene glycol monomethyl ether, ethylene glycol monoethyl ether, 2-methoxyethyl acetate, diethylene glycol dimethyl ether, 1-methoxy-2-propanol, 1-methoxy-2-propyl acetate, N,N-dimethylformamide, N,N-dimethylacetamide, toluene, ethyl acetate, ethyl lactate, methyl lactate, dimethyl sulfoxide and water.

For example, when polyisocyanate is used as the curing agent, it is preferable to use a solvent which does not react with the isocyanate groups (e.g., a ketone solvent such as methyl ethyl ketone or methyl isobutyl ketone).

One of these may be used alone or two or more may be used together.

Where necessary, the hydrophilic composition of the invention may additionally include additives such as pigments, film-forming aids, fillers, toners, wetting agents, antistatic agents, pigment dispersants, plasticizers, antioxidants, flow controllers, viscosity modifiers, antifoaming agents, ultraviolet absorbers and dispersants.

The composition has a solids concentration which, from the standpoint of coatability and workability, is preferably from 5 to 80 wt%, and more preferably from 10 to 30 wt%.

The composition has a viscosity which, from the standpoint of coatability and workability, is preferably from 0.01 to 0.05 Pa·s (temperature, 25°C). The viscosity is a value measured with a rotational viscometer.

The inventive composition may be a one-part liquid system, or may be a system that uses two or more liquids which are mixed prior to use.

The inventive composition is suitable for various types of substrates and can impart hydrophilicity to these.

Specific examples of materials making up the substrate include glass; synthetic resins (polymethyl methacrylate resins, polyethylene terephthalate resins, polybutylene terephthalate resins, polyethylene naphthalate resins, ABS resins, polycarbonate resins, polystyrene resins, epoxy resins, unsaturated polyester resins, melamine resins, diallyl phthalate resins, polyimide resins, urethane resins, nylon resins, polyethylene resins, polypropylene resins, polyvinyl chloride resins, fluoroplastics (polytetrafluoroethylene resins, polychlorotrifluoroethylene resins, polyvinylidene fluoride resins, perfluoroalkoxy fluoroplastics, tetrafluoroethylene-hexafluoropropylene copolymer resins, ethylene-tetrafluoroethylene copolymer resins, ethylene/chlorotrifluoroethylene copolymer resins, etc.), polybutadiene, polyisopropylene, SBR, nitrile rubber, EPM, EPDM, epichlorohydrin rubber, neoprene rubber, polysulfide, butyl rubber, etc.); metals (iron, aluminum, stainless steel, titanium, copper, brass, and alloys thereof, etc.); natural fibers such as cellulose, cellulose derivatives, cellulose analogs (chitin, chitosan, porphyran, etc.), cotton, silk and wool; regenerated fibers such as rayon; semi-synthetic fibers such as acetate; synthetic fibers such as vinylon, polyester, nylon, polyethylene, polypropylene, polyurethane and polyaramid fibers; and biconstituent fibers of these fibers (e.g., polyester/cotton). These materials may be in the form of, for example, a substrate, sheet, film, fibers, and various types of articles made therefrom.

By employing a known method of application, it is possible to form a film of the inventive composition on the surface of a substrate and render it into a hydrophilic coat.

Methods of application that may be used include bar coating, dip coating, spin coating, spray coating, float coating, brush coating, gravure coating, roll transfer coating, blade coating, air knife coating, slit coating, screen coating, inkjet coating and flexography. Of these, bar coating is preferred.

Following application of the composition onto a substrate, a cured film can be obtained by heating.

The heating temperature is preferably between 40°C and 250°C, and more preferably between 80°C and 120°C. The drying time is preferably from 10 seconds to 12 hours, and more preferably from 30 seconds to 3 hours.

Solvent within the composition may be removed by carrying out pre-drying under the same conditions as above.

The heating atmosphere may be either an open-air atmosphere or an inert gas (e.g., nitrogen or argon) atmosphere.

The thickness of the applied film of the invention (dry film thickness) is not particularly limited, but is preferably from 0.1 to 50 µm, and more preferably from 1 to 10 µm.

### EXAMPLES

Examples and Comparative Examples are given below by way of illustration, although the invention is not limited by these Examples.

### (1) Preparation of Coating Composition (Hydrophilic Composition)

### [Example 1]

A hydrophilic composition was prepared by mixing together, according to the formulation shown in Table 2: as component (A), a methyl ethyl ketone/IPA (1:2, wt/wt) solution of Acrit 1WX from Taisei Fine Chemical Co., Ltd., which is a copolymer containing the constitutional units represented by formulas (12), (13), (14), (15) and (16) below (solids concentration of solution, 25 wt%; referred to below as "A-1"); as component (B), the compound denoted below as (B-1); and the dioctyltin catalyst Neostann U-830 (Nitto Kasei Co., Ltd.). 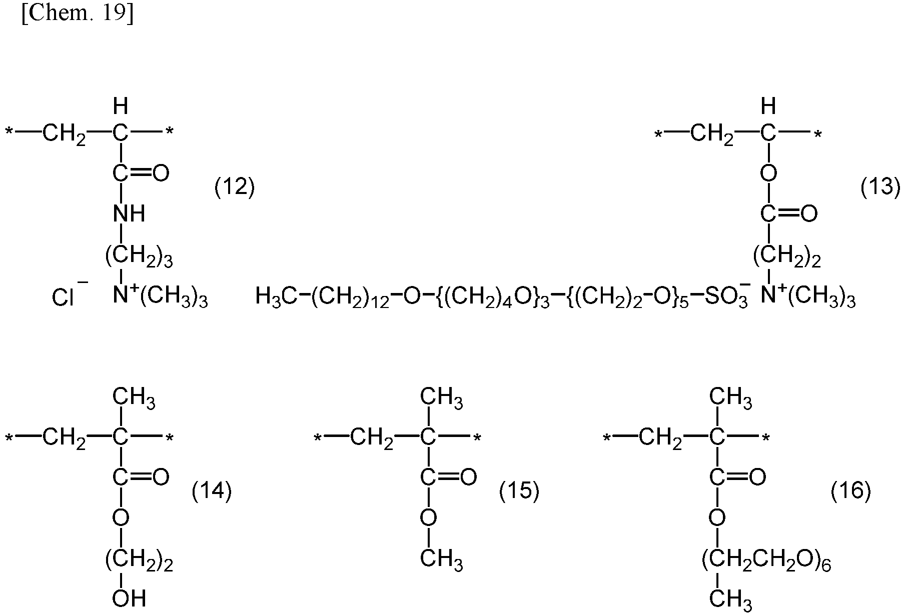 In these formulas, an asterisk * has the same meaning as above.

### [Examples 2 to 7, Comparative Examples 1 to 6]

Aside from changing the type of component (B) as shown in Table 2 and adding the curing agent shown in Table 2, hydrophilic compositions were prepared in the same way as in Example 1.

**[Table 2]**

| Formulation (pbw) | | Example | | | | | | Comparative Example | | | |
|---|---|---|---|---|---|---|---|---|---|---|---|
| | | 1 | 2 | 3 | 4 | 5 | 6 | 1 | 2 | 3 | 4 |
| (A) | A-1 | 100 | 100 | 100 | 100 | 100 | 100 | 100 | 100 | 100 | 100 |
| (B) | B-1 | 5 | - | - | 5 | 5 | 5 | - | - | - | 50 |
| | B-2 | - | 5 | - | - | - | - | - | - | - | - |
| | B-3 | - | - | 5 | - | - | - | - | - | - | - |
| | B'-1 | - | - | - | - | - | - | - | 5 | - | - |
| | B'-2 | - | - | - | - | - | - | - | - | 5 | - |
| Curing agent | C-1 | - | - | - | 5 | - | 5 | - | - | - | - |
| | C-2 | - | - | - | - | 5 | - | - | - | - | - |
| Hydrophilic silane | D-1 | - | - | - | - | - | 5 | - | - | - | - |
| Curing catalyst | Neostann U-830 | 0.9 | 0.9 | 0.9 | 0.9 | 0.9 | 0.9 | 0.9 | 0.9 | 0.9 | 0.9 |

In Table 1, the abbreviations have the following meanings.
- B-1:: The silane compound of formula (8-a) above
- B-2:: The silane compound of formula (8-b) above
- B-3:: The silane compound of formula (4-a) above
- B'-1:: 3-Glycidoxypropyltrimethoxysilane (KBM-403, from Shin-Etsu Chemical Co., Ltd.)
- B'-2:: 3-Isocyanatopropyltrimethoxysilane (KBM-9007, from Shin-Etsu Chemical Co., Ltd.)
- C-1:: Tris(trimethoxysilylpropyl) isocyanurate (KBM-9659, from Shin-Etsu Chemical Co., Ltd.)
- C-2:: MKC^{®} Silicate MS51 (from Mitsubishi Chemical Corporation), a partially hydrolyzed oligomer of tetramethoxysilane
- D-1:: The silane compound of formula (11) above

### (2) Evaluation of Shelf Stability of Hydrophilic Composition

Forty grams of each of the hydrophilic compositions immediately following preparation in the respective Examples and Comparative Examples was collected in respective 50 mL polyethylene containers and left at rest for three months in a thermostatic chamber (SPHH-201, from Espec) set to 40°C. After 3 months, they were removed from the thermostatic chamber and left at rest for one hour under 25°C/50% relative humidity conditions, following which the condition of the composition was examined. The evaluation criteria for shelf stability are as follows.
○: Composition retained flowability
× : Composition solidified to a gel-like state.

### (3) Production and Evaluation of Film

The hydrophilic compositions immediately following preparation in the respective Examples and Comparative Examples were each applied with a bar coater (No. 14) onto a polycarbonate plate and immediately dried at 120°C for 1 hour, giving a hydrophilic film. The following tests were carried out on the resulting films. The results are shown in Table 3.

### [Fog Resistance]

The fog resistance of each film was rated as "×" in cases where the film surface fogged up when exhaled on and as "○" in cases where the film surface did not fog up. The fog resistance was rated as "⊚" in cases where the film surface did not fog up when placed above a 60°C water bath at a height of 3 cm from the water's surface.

### [Evaluation of Water Resistance]

Each of the above films was immersed in tap water for 5 minutes at 25°C, after which water on the surface was wiped off with a paper wipe. The film was then air dried for 10 minutes at 25°C and the above-described fog resistance evaluation was carried out.

Next, each film was additionally immersed in tap water for one hour, after which water on the surface was wiped off with a paper wipe. The film was then air dried for 10 minutes at 25°C and the above-described fog resistance evaluation was carried out.

### [Moisture Resistance]

Each of the above films was left at rest for 24 hours in a thermohygrostat (KCL-2000W, Tokyo Rikakikai Co., Ltd.) set to 50°C and 98% RH. The film was then air dried for 10 minutes at 25°C, and the above-described fog resistance evaluation was carried out.

**[Table 3]**

| | | Shelf stability | Initial fog resistance | Water resistance | | Moisture resistance |
|---|---|---|---|---|---|---|
| | | | | After 5-minute immersion in water | After 1-hour immersion in water | 50°C/98%RH/24 hrs |
| Example | 1 | ○ | ⊚ | ⊚ | ○ | ○ |
| | 2 | ○ | ⊚ | ⊚ | ○ | ○ |
| | 3 | ○ | ⊚ | ⊚ | ○ | ○ |
| | 4 | ○ | ⊚ | ⊚ | ○ | ⊚ |
| | 5 | ○ | ⊚ | ⊚ | ○ | ⊚ |
| | 6 | ○ | ⊚ | ⊚ | ⊚ | ⊚ |
| Comparative Example | 1 | ○ | ⊚ | × | × | × |
| | 2 | × | ⊚ | ⊚ | ○ | ○ |
| | 3 | × | ⊚ | ⊚ | ○ | ○ |
| | 4 | ○ | × | × | × | × |

As shown in Table 3, the blocked isocyanate silane compound-containing compositions in Examples 1 to 6 had a good shelf stability and retained an excellent hydrophilicity and fog resistance after the water resistance tests (5-minute immersion in water, one-hour immersion in water) and even after the moisture resistance test (24 hours at 50°C and 98% RH). The film obtained in Example 6 had a particularly outstanding durability.

On the other hand, the film in Comparative Example 1, which does not include a blocked isocyanate silane compound, lost its fog resistance after 5 minutes immersion in water, and thus had a poor water resistance. The non-blocked isocyanate silane compound-containing composition in Comparative Example 2 and the 3-glycidoxypropyltrimethoxysilane-containing composition in Comparative Example 3 had poor shelf stabilities.

The composition in Comparative Example 4 to which excessive blocked isocyanate silane compound was added had a poor fog resistance.

## Claims

1. A hydrophilic composition comprising:
(A) 100 parts by weight of a hydrophilic copolymer having constitutional units of formula (1) below and constitutional units of formula (2) below 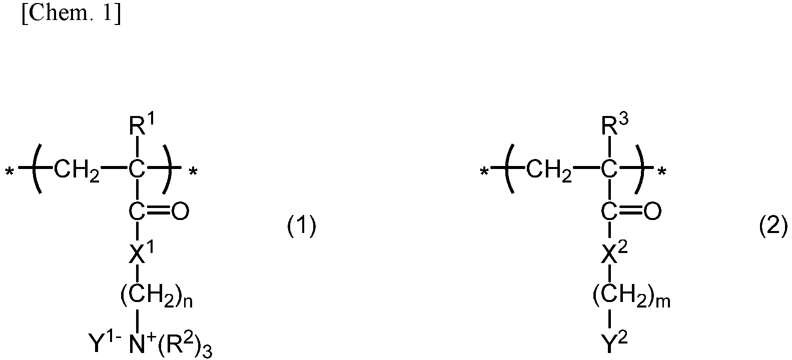 (wherein, in formula (1), R¹ is a hydrogen atom or a methyl group, each R² is independently a substituted or unsubstituted alkyl group of 1 to 6 carbon atoms, X¹ is -NH- or -O-, n is an integer from 1 to 6, and Y¹⁻ is a monovalent anion;
in formula (2), R³ is a hydrogen atom or a methyl group, X² is -NH- or -O-, Y² is a monovalent functional group selected from the group consisting of a hydrogen atom and hydroxyl, carboxyl, amino, acid anhydride and alkoxysilyl groups, m is an integer from 0 to 10, with the proviso that if m is 0, Y² is a hydrogen atom, and an asterisk * denotes a bond to a neighboring constitutional unit), and
(B) 0.001 to 10 parts by weight of a blocked isocyanate silane compound.

2. The hydrophilic composition of claim 1, wherein the blocked isocyanate silane compound (B) is represented by formula (4) below 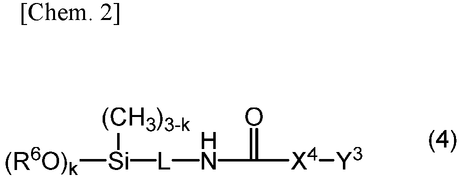 (wherein each R⁶ is independently an alkyl group of 1 to 8 carbon atoms, L is a divalent linking group, X⁴ is -O- or -NR⁷-, Y³ a hydrogen atom or a monovalent organic group, R⁷ is a hydrogen atom, an alkyl group of 1 to 8 carbon atoms or a group that is able to bond with Y³ and form a ring structure, and k is an integer from 1 to 3).

3. The hydrophilic composition of claim 2, wherein the blocked isocyanate silane compound (B) is represented by formula (5) or (6) below 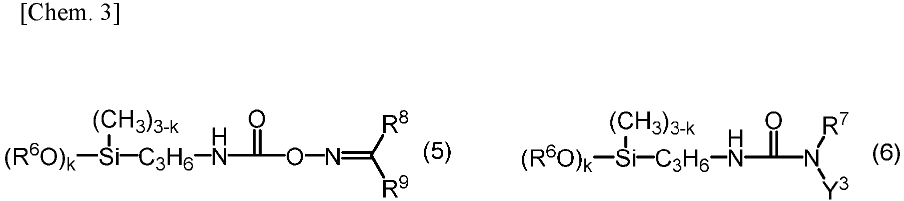 (wherein R⁶, R⁷, Y³ and k have the same meanings as above, R⁸ and R⁹ are each independently a hydrogen atom or a monovalent organic group, and R⁸ and R⁹ or R⁷ and Y³ may mutually connect to form a ring structure).

4. The hydrophilic composition of claim 1, further comprising at least one compound selected from the group consisting of polyisocyanate compounds, organosilicon compounds of formula (7) below and organosilicon compounds of formula (8) below 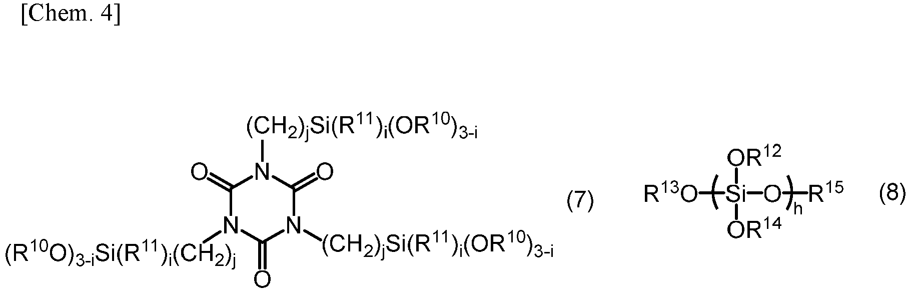 (wherein, in formula (7), R¹⁰ and R¹¹ are each independently an alkyl group of 1 to 10 carbon atoms or an aryl group of 6 to 10 carbon atoms, j is an integer from 1 to 10, and i is an integer from 1 to 3;
in formula (8), R¹², R¹³, R¹⁴ and R¹⁵ are each independently a hydrogen atom or an organic group of 1 to 6 carbon atoms, and h is an integer from 1 to 20).

5. A coating agent comprising the hydrophilic composition of any one of claims 1 to 4.

6. A hydrophilic film obtained by curing the coating agent of claim 5.
